# FASCICULE DE BREVET EUROPEEN

(11) **EP 3 762 635 B1**
(45) Date de publication et mention de la délivrance du brevet: **13.07.2022**
(21) Numéro de dépôt: 19712687.3
(22) Date de dépôt: 19.02.2019
(51) Int. Cl.: F16H 61/28, F16H 63/30

(54) **PROCEDE ET DISPOSITIF DE PILOTAGE D'UN ACTIONNEUR DE PASSAGE DE VITESSES A BALADEURS LORS DU DESENGAGEMENT D'UNE VITESSE**
VERFAHREN UND VORRICHTUNG ZUR STEUERUNG EINES GANGWECHSELBETÄTIGERS MIT SCHIEBEGÄNGEN WÄHREND DES AUSKOPPELNS EINES GETRIEBES
METHOD AND DEVICE FOR CONTROLLING A GEAR SHIFT ACTUATOR WITH SLIDING GEARS DURING THE DISENGAGEMENT OF A GEAR

(30) Priorité: 06.03.2018 FR 1851908
(43) Date de publication de la demande: 13.01.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: MERIENNE, Ludovic, 91190 Gif-sur-Yvette (FR); BEN-BELDI, Nesrine, 75017 PARIS (FR); CHAMEROY, Adrien, 78960 Voisins-le-Bretonneux (FR)
(74) Mandataire: Renault Group
(86) Numéro de dépôt international: PCT/EP2019/054122
(87) Numéro de publication internationale: WO 2019/170409

(56) Documents cités:
- FR-A1- 2 839 130
- FR-A1- 3 012 861
- FR-A1- 3 019 613

## Description

La présente invention concerne la commande du désengagement des vitesses, dans une boîte de vitesses à arbres parallèles munie d'un actionneur électrique de commande de passage, avec ressort d'assistance mécanique.

Elle a pour objet un procédé de pilotage d'un actionneur de passage de vitesses à baladeurs pour désengager une vitesse en libérant les dents d'un baladeur de celles d'un premier pignon de vitesse afin de placer ce baladeur au neutre, selon lequel un moteur déplace une fourchette de commande du baladeur en direction de sa zone de neutre en coopération avec un mécanisme d'assistance à ressort amené à libérer sur le baladeur, au cours du déplacement, une énergie capable de projeter celui-ci de manière incontrôlée au-delà de sa zone neutre vers un deuxième pignon de vitesse faisant face au premier sur la même ligne.

Cette invention a également pour objet un dispositif de pilotage d'un actionneur de passage de vitesses pour désengager une vitesse en libérant les dents d'un baladeur de celles d'un premier pignon de vitesse, afin de placer ce baladeur au neutre.

Elle trouve une application non limitative, sur des boîtes de vitesse de type « robotisée », c'est-à-dire dont le fonctionnement est celui d'une boite manuelle, mais dont le passage des vitesses est automatisé, qui sont dépourvues de mécanismes de synchronisation du pignon fou lors de l'engagement d'une vitesse.

Dans certains systèmes de commande interne de passage de vitesses sans mécanismes de synchronisation, on utilise des baladeurs à dents plates, ou « clabots », qui coopèrent avec des pignons à entrées de dentures complémentaires, pour engager ou désengager une vitesse.

Pour atteindre les niveaux de confort de passage standard, avec des boîtes à « clabots » sans synchroniseurs, on utilise des systèmes d'assistance mécanique au passage des vitesses, faisant intervenir un ressort de résistance capable d'accumuler de l'énergie en se comprimant, puis de libérer leur énergie, pour faciliter le crabotage du pignon.

Par la publication FR 2 988 800, on connaît un système d'actionnement d'un baladeur à clabots, comportant un pontet rigide de déplacement de fourchette muni de deux bras engagés autour d'un axe de commande de fourchette, de manière à autoriser son propre déplacement axial le long de cet axe, sous le contrôle d'un organe externe de commande. Le ressort d'assistance entoure l'axe de fourchette, entre deux bras du pontet et deux bagues d'arrêt. Celles-ci sont en appui entre les extrémités du ressort et les bras du pontet, de manière à pouvoir coulisser avec un débattement limité le long de l'axe.

Dans une boîte à « clabots », un tel système assure parfaitement sa fonction d'assistance au passage, lors de l'engagement d'une vitesse : le ressort emmagasine l'énergie fournie par l'actionneur en se comprimant, lorsque les dents du baladeur et du pignon sont en butée ; il libère ensuite son énergie en poussant la fourchette, lorsque le crabotage est possible.

Par la publication FR 3 019 613 on connaît un procédé de pilotage d'un actionneur de passage de vitesses à baladeur pour désengager une vitesse, l'actionneur comportant un mécanisme d'assistance à ressort.

Lors du désengagement d'une vitesse, une composante longitudinale L de l'effort résultant des couples transitant par les clabots s'oppose à l'effort de l'actionneur. Les méthodes de pilotage connues permettent d'annuler le couple au crabot, malgré les incertitudes de réalisation des différents actionneurs. Toutefois, avec ces méthodes, il subsiste généralement un couple résiduel sur les clabots, qui peut encore retenir le baladeur en position engagée, lorsque l'actionneur de boîte est activé pour désengager la vitesse.

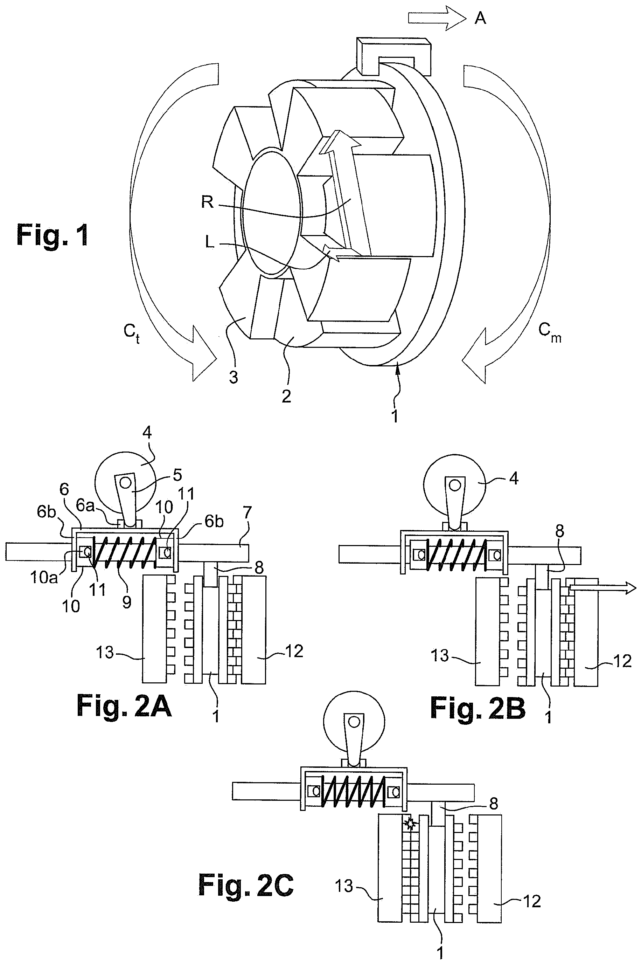

Lorsque le dispositif d'actionnement du baladeur comporte un système d'assistance mécanique à ressort utile à l'engagement des vitesses, son énergie peut projeter violement le baladeur dans la zone neutre lors d'un désengagement, au moment où le couple résiduel sur les dents du baladeur s'annule. Un tel mouvement est illustré sur les figures 2A à 2C. La largeur de la zone neutre étant faible, le baladeur peut venir cogner les dents du pignon « d'en face », sur la même ligne de vitesses. Un rebond sur ces dents, peut même entraîner le réengagement du rapport qui vient d'être quitté.

La plupart des transmissions automatiques, utilisent le glissement d'un embrayage, de systèmes de synchronisation mécaniques, d'un convertisseur hydro-cinétique de couple, ou encore le pilotage d'un bloc hydraulique dédié, pour effectuer dans de bonnes conditions, les opérations de désengagement d'un premier rapport et d'engagement d'un deuxième.

En l'absence d'un système mécanique ou hydraulique permettant de réaliser un couplage progressif, la situation est différente, notamment si le dégagement des pignons de boîte est préparé uniquement en plaçant l'arbre de transmission et l'arbre du moteur à leurs régimes de synchronisation par pilotage des actionneurs de puissance.

La présente invention vise à sécuriser le désengagement de la vitesse, en supprimant les risques de collision du baladeur avec le pignon opposé sur la ligne de vitesse, du fait de la détente d'un ressort d'assistance.

Dans ce but, l'actionneur est piloté en fonction d'une requête de position de fourchette, assurant le désengagement de la vitesse, sans pour autant lui permettre de s'écarter de la position réelle de la fourchette au cours de son déplacement.

Le dispositif proposé comporte principalement :
- un bloc de comparaison de la requête de position de l'actionneur et de la position de la fourchette, pour identifier cette requête comme une requête de désengagement de vitesse,
- un bloc de saturation de la requête de position entre la somme et la différence de la position de la fourchette et du seuil de compression du ressort qui déclenche la projection du baladeur, et
- un bloc de consolidation, substituant la requête de position corrigée par le bloc de saturation, à la requête de position, si celle-ci est identifiée à une requête de désengagement de vitesse.

D'autres caractéristiques et avantages de la présente invention apparaîtront clairement à la lecture de la description suivante d'un mode de réalisation non limitatif de celle-ci, en se reportant aux dessins annexés sur lesquels :
- la figure 1 représente un baladeur craboté sur un pignon de vitesse,
- les figures 2Aà 2C illustrent la projection du baladeur vers le pignon de vitesse opposé,

- la figure 3, représente le dispositif de pilotage proposé,
- les figures 4A à 4D illustrent le fonctionnement de l'invention, et
- la figure 5 traduit son application en courbes de fonctionnement.

L'invention concerne une boîte de vitesses à baladeurs tels que celui de la figure 1, munis de dents droites ou « clabots » 2. Le baladeur 1 est solidaire en rotation de l'arbre sur lequel il est implanté. Ses dents 2 sont droites. Elles s'engagent entre des dents droites complémentaires 3 d'un pignon de vitesse, tournant fou sur l'arbre quand il n'est pas lié au baladeur. Les pignons sont liés aux roues motrices avec un rapport de démultiplication fixe. Le baladeur 1 est lié à l'arbre moteur. Il est déplacé longitudinalement sur l'arbre d'entrainement par un actionneur de boîte, en vue d'emboîter les dentures 2 et 3 pour engager un rapport, ou de dégager celles-ci, pour le désengager.

Lors de l'opération de désengagement, une composante de force longitudinale L s'oppose à l'effort de l'actionneur. Le schéma mentionne l'effort A, de l'actionneur de boîte, le couple à l'arbre moteur Cm, et le couple à l'arbre de transmission Ct. Le décrabotage du baladeur 1, n'est possible que lorsque la composante longitudinale L est inférieure à l'effort de l'actionneur A. En l'absence de synchroniseur mécanique, la réduction de l'effort L est obtenue par un pilotage en synchronisation, de l'arbre moteur et de l'arbre de transmission.

L'actionneur électrique de passage de vitesses illustré de par les figures 2A à 2C comprend un moteur rotatif 4 (placé sous le contrôle d'une carte ou unité de calcul) contrôlant le déplacement d'un doigt de passage de vitesses 5. Le doigt 2 est engagé dans la gorge 6a d'un pontet rigide 6. Le pontet 6 est muni de deux bras 6b engagés autour de l'axe de commande 7 d'une fourchette 8 de commande d'un baladeur 1 à dents plates 2, tel que celui de la figure 1. Le déplacement du baladeur 1 est assuré par le moteur 4, dont l'unité de calcul reçoit une information de position de la fourchette 8, fournie par un capteur de position (non représenté). Un ressort d'assistance 9 est enroulé autour de l'axe de fourchette 7, entre les deux bras 6b du pontet. Deux bagues 10 limitent la compression maximum du ressort 9 et le débattement du pontet sur l'axe. Elles présentent des lumières oblongues 11a dans lesquelles se déplace une goupille 11, fixée sur l'axe 7.

Lors du désengagement de la vitesse, le doigt 5 se déplace de la figure 2A à la figure 2B en comprimant le ressort 9. Lorsque le couple résiduel sur les dents du baladeur est surmonté par la poussée du ressort, le baladeur se dégage du premier pignon 12, et traverse la zone neutre. Si la poussée du ressort est violente, il vient cogner la denture du pignon opposé 13 (Figure 2C).

Le moteur 4 déplace la fourchette 8 en direction de sa zone de neutre, en coopération avec le mécanisme d'assistance à ressort 9. Comme indiqué plus haut, le ressort 9 est amené à libérer sur le baladeur au cours du déplacement, une énergie capable de le projeter celui-ci de manière incontrôlée au-delà de la zone neutre, vers le deuxième pignon de vitesse 13 faisant face au premier 12.

La méthode proposée vise à contrôler le désengagement de la vitesse engagée, afin de placer ce baladeur au neutre en minimisant le risque d'interférence entre les dents du baladeur avec les dents du pignon opposé sur la même ligne de vitesses. L'actionneur dispose de la mesure du capteur de position de fourchette, avec un taux de rafraîchissement élevé. Conformément à l'invention, il est piloté en fonction d'une requête de position de fourchette assurant le désengagement de la vitesse, sans pour autant lui permettre de s'écarter de la position réelle de la fourchette au cours du déplacement.

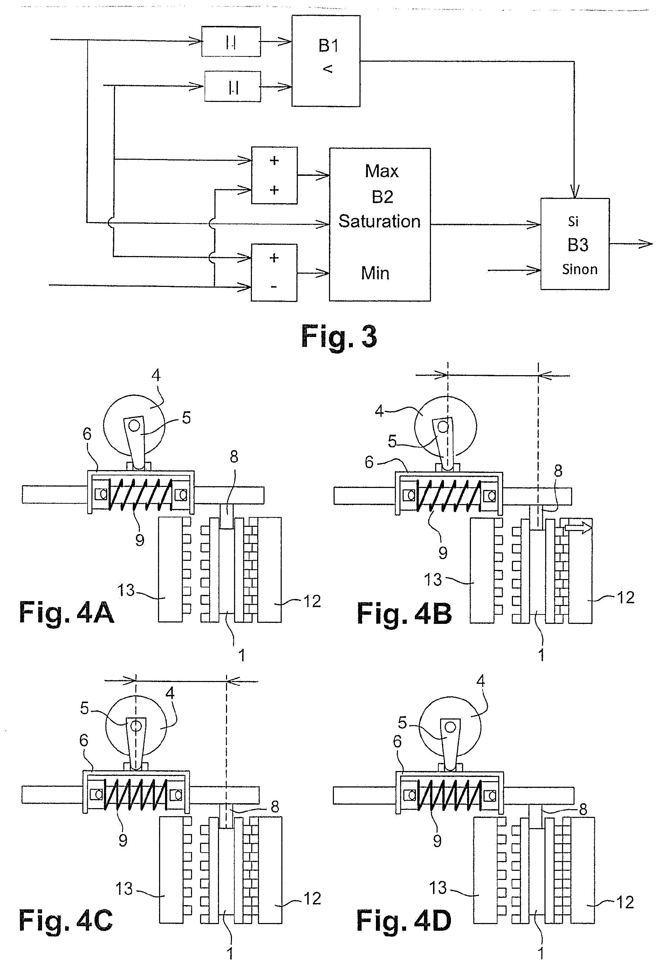

Le traitement de la requête de position est illustré par la figure 3, qui représente le dispositif de pilotage proposé. Ce dispositif comporte trois blocs de calcul principaux :
- un bloc B1 de comparaison de la requête de position de l'actionneur et de la position de la fourchette, pour identifier cette requête comme une requête de désengagement de vitesse,
- un bloc B2 de saturation de la requête de position, entre la somme et la différence de la position de la fourchette et du seuil de compression du ressort qui déclenche la projection du baladeur,
- un bloc B3 de consolidation, substituant la requête de position corrigée par le bloc de saturation à la requête de position, si celle-ci est identifiée à une requête de désengagement de vitesse.

Dans ce dispositif, la requête de position « *position request* » et la position de la fourchette 8 « *fork position* » sont introduites dans le premier bloc B1, qui est un comparateur, déduisant de cette comparaison si la requête de position est une requête de passage au neutre « *declutching request* » ou non. La requête de position est identifiée comme une requête de désengagement de vitesse, si elle est inférieure en valeur absolue à la position réelle de la fourchette 8, rapportée au centre de la zone neutre.

Parallèlement, la requête de position est envoyée dans le deuxième bloc B2, qui est un saturateur, ainsi que la somme et la différence de la position de la fourchette 8 avec un seuil de compression du ressort 9 « *compression threshold* »*.* Dans ce bloc, la requête de position est corrigée par saturation entre deux limites définies par la somme et la différence de la position de la fourchette et du seuil de compression du ressort qui déclenche la projection du baladeur 9.

La requête de position est comparée à sa valeur corrigée, dans le troisième bloc B3, de consolidation. Si la requête de position est identique à sa valeur corrigée, elle est consolidée, et exécutée. Le fait qu'elle n'ait pas été corrigée dans le saturateur signifie qu'elle ne s'écarte pas de la position réelle de la fourchette 8. Dans ces conditions, son application par l'actionneur ne risque pas d'entraîner une décompression brutale du ressort qui déclencherait la projection du baladeur au-delà de sa zone de neutre.

Cette stratégie revient à piloter en permanence l'actionneur vers une cible assurant le désengagement de la vitesse, en lui imposant d'appliquer en permanence une consigne qui tente de s'approcher de la cible, tout en lui interdisant de s'écarter de la position de réelle de la fourchette 8, pour ne pas risquer d'entraîner celle-ci au-delà sa zone de neutre. Cette zone peut par exemple s'étendre de + à - 2mm par rapport à la position centrale du baladeur 1, avec pour celui-ci une course d'engagement d'environ 6mm de chaque côté.

Sur la figure 4C, une vitesse est engagée. Son désengagement n'a pas commencé. Sur la figure 4B, le doigt de passage a commencé à se déplacer, entraînant le pontet 6 vers la gauche en comprimant le ressort 9, sans déplacer le baladeur 1. Sur la figure 4C, le baladeur 1 commence à sortir du pignon 12. Sur la figure 4D, il est sorti du pignon 12, et entré dans la zone de neutre.

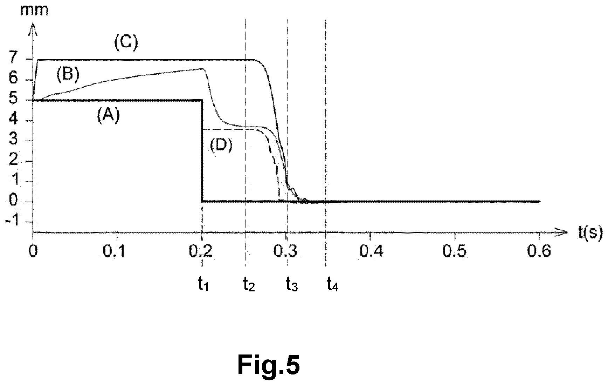

Sur la figure 5, on a reproduit à partir d'un exemple, les quatre courbes d'évolution dans le temps :
- de la requête de position (courbe A)
- de la position du moteur 4 (position du doigt de commande 5) (courbe B),
- de la fourchette 8 (courbe C),
- de la requête de position recalculée, ou consolidée (courbe D).

A la date t1, le désengagement n'a pas commencé. Le système est dans l'état de la figure 4A. La requête de position brute passe brutalement sur une cible de position neutre. Le moteur 4 commence à se déplacer, en comprimant le ressort 9 sans entraîner le baladeur 1 et la fourchette 8, jusqu'à la date t2 (figure 4B). A t2, la fourchette 8 commence à se déplacer, en application de la requête consolidée de la courbe D. La fourchette rejoint la position du moteur à t3. Le moteur 4 et la fourchette 8 se déplacent sans s'écarter jusqu'qu'à la cible, de t3 à t4. A t4, la cible est atteinte, sans avoir été dépassée. Grâce à l'invention, le baladeur n'est pas sorti de zone de neutre pendant le mouvement de désengagement, de sorte que tout risque de collision avec le pignon opposé 13 a été écarté.

En conclusion, l'invention permet d'assurer avec un niveau de robustesse élevé le retrait des dents du baladeur, hors de celles du pignon. Elle évite que le baladeur soit projeté au travers de la zone neutre, dont la largeur est faible. Les chocs contre les dents du pignon opposé, avec un rebond pouvant entraîner le réengagement de la vitesse qui vient d'être quittée, sont éliminés. Les désagréments acoustiques et les échecs de désengagement liés à ces disfonctionnements, disparaissent du même fait.

## Revendications

1. Procédé de pilotage d'un actionneur de passage de vitesses à baladeurs pour désengager une vitesse en libérant les dents (2) d'un baladeur (1) de celles d'un premier pignon (12) de vitesse afin de placer ce baladeur au neutre, selon lequel un moteur (4) déplace une fourchette de commande (8) du baladeur en direction de sa zone de neutre en coopération avec un mécanisme d'assistance à ressort (9) amené à libérer sur le baladeur au cours du déplacement une énergie capable de projeter celui-ci de manière incontrôlée au-delà de sa zone neutre vers un deuxième pignon de vitesse (13) faisant face au premier (12) sur la même ligne, **caractérisé en ce que** l'actionneur est piloté en fonction d'une requête de position de fourchette (8), corrigée par saturation entre deux seuils définis par la somme et la différence de la position instantanée de la fourchette (8) et du seuil de compression du ressort (9) déclenchant la projection du baladeur (1), afin d'assurer le désengagement de la vitesse, sans pour autant que cette requête s'écarte de la position réelle de la fourchette (8) au cours de son déplacement.

2. Procédé de pilotage selon la revendication 1, **caractérisé en ce que** la requête de position est identifiée comme une requête de désengagement de vitesse, si elle est inférieure en valeur absolue à la position de la fourchette (8), par rapport au centre de sa zone neutre.

3. Procédé de pilotage selon la revendication précédente, **caractérisé en ce que** le moteur exécute une requête de position consolidée, dans laquelle la requête corrigée se substitue à la requête de position si celle-ci est identifiée comme une requête de désengagement.

4. Dispositif de pilotage d'un actionneur de passage de vitesses pour désengager une vitesse en libérant les dents d'un baladeur de celles d'un premier pignon de vitesse afin de placer ce baladeur au neutre, selon le procédé de l'une des revendications précédentes, caractérisé e ce qu'il comporte :
- un bloc B1 de comparaison de la requête de position de l'actionneur et de la position de la fourchette (8), pour identifier cette requête comme une requête de désengagement de vitesse,
- un bloc B2 de saturation de la requête de position entre la somme et la différence de la position de la fourchette (8) et du seuil de compression du ressort (9) qui déclenche la projection du baladeur (1),
- un bloc B3 de consolidation, substituant la requête de position corrigée par le bloc de saturation, à la requête de position, si celle-ci est identifiée à une requête de désengagement de vitesse.

## Patentansprüche

1. Verfahren zur Steuerung eines Gangschaltaktuators mit Schieberädern zum Auskuppeln eines Ganges, indem die Zähne (2) eines Schieberades (1) außer Eingriff mit denjenigen eines ersten Gangrades (12) gebracht werden, um dieses Schieberad in die Neutralstellung zu bringen, gemäß welchem ein Motor (4) eine Schaltgabel (8) des Schieberades in Richtung ihres Neutralbereichs verlagert, im Zusammenwirken mit einem Hilfsmechanismus mit einer Feder (9), die veranlasst wird, am Schieberad während der Verlagerung eine Energie freizusetzen, die in der Lage ist, dieses unkontrolliert über seinen Neutralbereich hinaus zu einem zweiten Gangrad (13) hin zu stoßen, das dem ersten (12) auf der gleichen Linie gegenüberliegt, **dadurch gekennzeichnet, dass** der Aktuator in Abhängigkeit von einer Positionsanforderung für die Gabel (8) gesteuert wird, die durch Sättigung zwischen zwei Schwellenwerten korrigiert ist, die durch die Summe und die Differenz der momentanen Position der Gabel (8) und des das Stoßen des Schieberades (1) auslösenden Kompressionsschwellenwertes der Feder (9) definiert sind, um das Auskuppeln des Ganges sicherzustellen, ohne dass dabei diese Anforderung von der realen Position der Gabel (8) während ihrer Verlagerung abweicht.

2. Verfahren zur Steuerung nach Anspruch 1, **dadurch gekennzeichnet, dass** die Positionsanforderung als eine Anforderung zum Auskuppeln eines Ganges identifiziert wird, falls sie dem absoluten Betrag nach kleiner als die Position der Gabel (8) ist, bezogen auf den Mittelpunkt ihres Neutralbereichs.

3. Verfahren zur Steuerung nach dem vorhergehenden Anspruch, **dadurch gekennzeichnet, dass** der Motor eine konsolidierte Positionsanforderung ausführt, in welcher die korrigierte Anforderung die Positionsanforderung ersetzt, falls diese als eine Anforderung zum Auskuppeln identifiziert wird.

4. Vorrichtung zur Steuerung eines Gangschaltaktuators zum Auskuppeln eines Ganges, indem die Zähne eines Schieberades außer Eingriff mit denjenigen eines ersten Gangrades gebracht werden, um dieses Schieberad in die Neutralstellung zu bringen, gemäß dem Verfahren nach einem der vorhergehenden Ansprüche, **dadurch gekennzeichnet, dass** sie aufweist:
- einen Block B1 zum Vergleich der Positionsanforderung des Aktuators und der Position der Gabel (8), um diese Anforderung als eine Anforderung zum Auskuppeln eines Ganges zu identifizieren,
- einen Block B2 zur Sättigung der Positionsanforderung zwischen der Summe und der Differenz der Position der Gabel (8) und des Kompressionsschwellenwertes der Feder (9), welcher das Stoßen des Schieberades (1) auslöst,
- einen Block B3 zur Konsolidation, welcher die Positionsanforderung durch die durch den Sättigungsblock korrigierte Positionsanforderung ersetzt, falls die Positionsanforderung als eine Anforderung zum Auskuppeln eines Ganges identifiziert wird.

## Claims

1. Method for controlling a gear shift actuator with sliding gears to disengage a gear by releasing the teeth (2) of a sliding gear (1) from those of a first gear pinion (12) so as to position this sliding gear in neutral, wherein a motor (4) displaces a control fork (8) of the sliding gear towards the neutral region thereof in cooperation with a spring-assisted mechanism (9) which releases energy on the sliding gear during displacement which is capable of projecting the latter in an uncontrolled manner beyond the neutral region thereof towards a second gear pinion (13), opposite the first (12), on the same line, **characterized in that** the actuator is controlled as a function of a fork (8) position request, corrected by saturation between two thresholds defined by the sum and the difference of the instantaneous position of the fork (8) and the compression threshold of the spring (9) triggering the projecting of the sliding gear (1) ensuring the gear is disengaged without this request deviating from the actual position of the fork (8) during the displacement thereof.

2. Control method according to Claim 1, **characterized in that** the position request is identified as a gear disengagement request, if it has a lower absolute value than the position of the fork (8), relative to the center of its neutral region.

3. Control method according to the preceding claim, **characterized in that** the motor executes a consolidated position request, in which the corrected request is substituted for the position request, if it is identified as a disengagement request.

4. Device for controlling a gear shift actuator to disengage a gear by releasing the teeth of a sliding gear from those of a first gear pinion, so as to position this sliding gear in neutral, according to the method of one of the preceding claims, **characterized in that** it comprises:
- a comparison unit B1 for comparing the actuator position request and the position of the fork (8), in order to identify this request as a gear disengagement request,
- a saturation unit B2 for saturating the position request between the sum and the difference of the position of the fork (8) and the compression threshold of the spring (9) which triggers the projecting of the sliding gear (1),
- a consolidation unit B3 substituting the position request corrected by the saturation unit for the position request, if this is identified as a gear disengagement request.
